# EUROPEAN PATENT APPLICATION

(11) **EP 4 845 175 A1**
(43) Date of publication of application: **25.11.2026**
(21) Application number: 25178018.5
(22) Date of filing: 21.05.2025
(51) Int. Cl.: H04N 25/40, H04N 25/42, H04N 25/445, H04N 25/46, H04N 25/767, H04N 25/773

(54) **SPAD-MODULE AND IMAGE SENSOR**

(71) Applicant: Pi Imaging Technology SA, 1015 Lausanne (CH)
(72) Inventor: KESHAVARZIAN, Pouyan, 1015 Lausanne (CH); CARIMATTO, Augusto, 1015 Lausanne (CH); ANTOLOVIC, Ivan Michel, 1015 Lausanne (CH)
(74) Representative: Schiffer, Axel Martin

(57) **Abstract**

The present invention relates to a SPAD-module having a SPAD-array comprising a plurality of macropixels, each macropixel comprising at least one SPAD-pixel. According to the invention, the SPAD-module is characterized further comprising a time control unit being operatively connected with each of the macropixels and at least one final combination unit being connected with the time control unit, wherein the time control unit is configured for variably selecting at least one macropixel for which a respective macropixel signal is forwarded to the final combination unit and wherein the final combination unit is configured for generating an output signal as a combination of the macropixel signals from the selected macropixels and wherein the output signal retains a time structure of the combined macropixel signals. The present invention relates further to an image sensor.

## Description

The present invention relates in a first aspect to a SPAD-module according to the preamble of claim 1. In a second aspect the invention relates to an image sensor.

A generic SPAD-module has a SPAD-array comprising a plurality of macropixels, each macropixel comprising at least one SPAD-pixel.

A SPAD-pixel (SPAD = single-photon avalanche diode) is a well-known semiconductor detector technology composed of the SPAD itself and coupling circuits for conditioning an electrical output of the SPAD. The basic functionality is described as follows. When a photon is absorbed within the detector, i.e., the SPAD, an electrical pulse can be created, whereby the statistical probability of electrical pulse creation, i.e., detection, is governed by the detector physical design. Therefore, the pixel is capable of detecting single photons. Moreover, the time of detection, within some statistical precision, can be determined using time stamping methods. Time stamping can be performed using chronometer circuits such as those known as Time-to-digital convertors (TDCs). TDCs convert the relative time of detection to a series of digital signals known as bits. Acquiring this relative time between a trigger event and the detection of a photon in any given pixel is an indispensable utility for a variety of applications. Examples of applications include, but are not limited to, biological life-science imaging applications such as fluorescence lifetime imaging microscopy (FLIM) and automotive LIDAR (LIDAR = Light imaging, detection and ranging). Architecturally speaking, time-stamping can be performed in a number of ways. In the simplest construction, a single pixel can contain a single TDC. Therefore, the TDC can be operated in such a way that the relative temporal firing, i.e., the detection, of that individual pixel can be monitored, with reference to another timing event, e.g., a Start or Stop signal, such as a triggering laser pulse. However, the scalability of this approach is limited, owing to the complexity involved in managing the large number of TDC control and output signals (bits) that would be required if many TDCs are included within a sensor design. Therefore, for applications requiring a large number of detectors, i.e., a SPAD array, a more practical solution is required.

It can be considered an object of the present invention to specify a SPAD-module and an image sensor where the collection of photon detections from a variety of physical locations within an area of the SPAD-array and the extraction of the corresponding timing information is possible in a particularly flexible manner.

This object is solved according to the invention by the SPAD-module having the features of claim 1 and by the image sensor having the features of claim 15.

The SPAD-module having the features of claim 1 is characterized in further comprising a time control unit being operatively connected with each of the macropixels and at least one final combination unit being connected with the time control unit, wherein the time control unit is configured for variably selecting, in particular at a given time, at least one macropixel for which a respective macropixel signal is forwarded to the final combination unit and wherein the final combination unit is configured for generating an output signal as a combination of the macropixel signals from the selected macropixels, and wherein the output signal retains a time structure of the combined macropixel signals.

The image sensor according to the invention comprises a SPAD-module according to the invention and a control and interface unit being connected to the SPAD-module and comprising a time stamp unit configured for attributing, in each case, a time stamp to pulses of the at least one output signal from the SPAD-module.

The term SPAD-pixel denotes a SPAD, i.e., a single-photon avalanche diode and coupling circuits for conditioning an electrical output of the SPAD. The SPAD-pixels can be made in a silicon-based process. The term SPAD-array denotes an array, i.e., a one-dimensional or two-dimensional arrangement of SPAD-pixels. The term macropixel comprises a set of SPAD-pixels. Each macropixel comprises at least one SPAD-pixel. The SPAD-module according to the invention is preferably realized on one chip, in particular a silicon chip. The term image sensor denotes a one-dimensionally or two-dimensionally spatially resolving photodetector. The time control unit can be a semiconductor structure realized within the same chip as SPAD-array.

It can be considered an essential idea of the invention to provide a variably reconfigurable interface, i.e., the time control unit, between the SPAD-array and further propagation and evaluation electronics. This time control unit substantially enhances the feature set of the SPAD-array. More specifically, the purpose of the time control unit which can also be termed time control module is to facilitate the collection of photon detections from a variety of physical locations (spatial domain) within the image sensor, comprising an array of SPAD-pixels, in a reconfigurable manner. This then enables flexibility in terms of extracting timing information (temporal domain) from any given detection.

Preferred embodiments of the SPAD-module according to the invention and advantageous embodiments of the image sensor according to the invention will be described in the following, in particular with reference to the dependent claims and the figures.

In principle, the SPAD-array can have any structure of SPAD-pixels arranged essentially in a plane. It is also possible, though, that the SPAD-pixels are arranged, in each case at a specific axial coordinate. i.e., at a specific height with respect to the plane of the SPAD-array. Generally, it is not necessary that the SPAD-pixels are arranged in a regular or periodic fashion. In preferred embodiments, the SPAD-array has a rectangular or hexagonal structure. That means that the SPAD-pixels are arranged in such a way that the SPAD-pixels are located on a rectangular or a hexagonal lattice, respectively. The SPAD-array can, e.g., comprise 192 SPAD-pixels in a rectangular arrangement of 32 columns and 6 SPAD-pixels per column.

Generally, the macropixels can comprise any combination of SPAD-pixels of the SPAD-array. Preferably, a macropixel is made up of pairs of SPAD-pixels being directly adjacent to each other. In a preferred embodiment, at least one or each of the macropixels comprises, in each case, SPAD-pixels of a column of the rectangular structure. In another preferred embodiment, e.g., where the SPAD-array has a hexagonal structure, at least one or each of the macropixels comprises, in each case, a central SPAD-pixel and a number of SPAD-pixels, e.g., six SPAD-pixels, immediately adjacent to the central SPAD-pixel. Alternatively or additionally, at least one or each of the macropixels comprises, in each case, SPAD-pixels forming concentrical rings around a central SPAD-pixel.

In principle, as, e.g., for the latter embodiment, the number of SPAD-pixels constituting a macropixel can be different for at least two of the macropixels. In preferred embodiments, the number of SPAD-pixels constituting a macropixel is the same for all macropixels of the SPAD-array.

Generally, only one single SPAD-pixel can constitute a macropixel. In a preferred embodiment, at least one or each of the macropixels comprises only one SPAD-pixel. In the case where a macropixel comprises only one SPAD-pixel the macropixel signal of such a macropixel can be identical to the pixel signal of the respective SPAD-pixel. The term pixel signal generally denotes a measurement signal from the respective SPAD-pixel.

In a preferred embodiment, at least one or each of the macropixels comprises a plurality of SPAD-pixels and further comprises a combination unit being connected to each of the SPAD-pixels of the respective macropixel, the combination unit being, in each case, configured for generating the macropixel signal as a combination of pixel signals from at least one of the SPAD-pixels constituting the respective macropixel, wherein the macropixel signal, in each case, retains a time structure of the respectively combined pixel signals.

In a further advantageous embodiment, at least one or each combination unit comprises a logical OR-gate having at least n inputs, where n is the number of pixel signals to be combined. Additionally or alternatively, at least one or each final combination unit comprises a logical OR-gate having at least M inputs, where M is the number of macropixel signals to be combined. Logical OR-gates are technologically well known and can be realized in a compact manner.

In another preferred embodiment, in at least one or each combination unit the OR-gate comprises an additional input being reserved for feeding an emulated pixel signal to this OR-gate and/or in at least one or each final combination unit the OR-gate comprises an additional input being reserved for an feeding an emulated macropixel signal to this OR-gate.

The emulated pixel signal is an artificially created pixel signal that serves the purpose of monitoring or testing if a specific combination unit is working correctly in particular in the case where none of the pixel signals fed into the respective OR-gate contains any pulses.

The emulated macropixel signal is an artificially created macropixel signal that serves the purpose of monitoring or testing if a specific final combination unit is working correctly in particular in the case where none of the macropixel signals fed into the respective OR-gate contains any pulses.

The time control unit preferably comprises a shift register configured for enabling or disabling, in particular at a specific given time, selected macropixels according to a given selection. A respective selection of macropixels to be enabled or disabled can be provided to the time control unit, e.g., by the control and interface unit of the image sensor. In the case where a macropixel is enabled the macropixel signal of this macropixel is forwarded by the time control unit to the respective final combination unit. In the case where a macropixel is disabled the macropixel signal of this macropixel is not forwarded to a final combination unit, i.e., this macropixel signal is suppressed and does not contribute in any way to an output signal.

In a further embodiment, the time control unit can be reconfigurable for generating at least two different clusters of macropixels. Preferably, a separate final combination unit can be present for each of the clusters. Thus, a further structure element of grouping the SPAD-pixels can be provided. A cluster of macropixels generally comprises a plurality of macropixels. Preferably, a macropixel belongs to only one cluster. The separate final combination units are in each case configured to generate a separate output signal.

Preferably, the SPAD-module further comprises a masking unit being operatively connected to each of the SPAD-pixels for switching off or "masking" selected SPAD-pixels according to a given selection. The masking unit serves the purpose of further selecting and specifying a region of the SPAD-array from which detection signals are collected and propagated to the time control module. SPAD-arrays having such masking units are known in the art.

The masking unit can be independent from the time control unit. This means that the masking unit can provide an independent means of deactivating specific SPAD-pixels. An important advantage is that this feature allows a manipulation of the composition of macropixels.

In a further embodiment, the SPAD-module further comprises a counting unit being operatively connected to each of the SPAD-pixels for continuously and separately counting light pulses, in particular single photons, detected by each of the SPAD-pixels.

By counting the detection events in each SPAD-pixel separately, such a counting unit serves the purpose of enabling measurements with the highest possible spatial resolution.

Thus, regardless of the settings for the time control unit, the SPAD-module can continue to perform continuous photon counting with full spatial resolution. Such a mode of operation can be termed a photon counting mode. In an effort to be able to count detection events at all times, the counting unit can comprise two counters, e.g., two on-chip-counters, for each SPAD-pixel. One of the counters can keep track of photon detections during a programmable integration period, while the other counter is sending the count data from a previous integration period to the control and interface unit of the image sensor. Essentially, one counter for each SPAD-pixel is active while the other has its corresponding data being read out from the chip.

The counting unit can preferably be independent from the time control unit. This means that even if the timing lines or macropixel signal lines are deactivated for certain SPAD-pixels, i.e., if certain macropixels are disabled, the full spatial resolution is accessible through the on-chip counters.

In a further preferred embodiment, the SPAD-module further comprises a time gate unit being operatively connected to the SPAD-array for switching on or off the SPAD-array.

The time gate unit allows the SPAD-module and the image sensor to be operated in a time gating mode which opens a window (gate) of time where the SPAD-pixels are sensitive to photons. In this mode of operation, the time control unit can be operated as previously explained, with the ability to activate/deactivate the macropixels as required by the application. The on-chip counters of the counting unit can also be active in this mode, enabling full spatial resolution of the SPAD-module and the image sensor.

The control and interface unit of the image sensor can be configured for controlling the time control unit, and in particular of providing a clock signal to the time control unit and a configuration of macropixels to be enabled to the time control unit. More specifically, the control and interface unit of the image sensor can be configured to control the time control unit in a multiplex-mode in such a way that the macropixel signals are forwarded to the or one of the final combination units one at a time.

Additionally or alternatively, the control and interface unit can be configured for controlling the time gate unit and/or the counting unit.

Additionally or alternatively, the control and interface unit can be configured for at least one of: evaluating measurement data from the counting unit; evaluating measurement data from the SPAD-module; receiving and transmitting data through an interface, in particular a bus interface; receiving energy through the interface; providing an emulated pixel signal to at least one or each of the combination units; providing an emulated macropixel signal to at least one or each of the final combination units.

Generally, it would be possible to realize the control and interface unit on the same chip as the SPAD-module. It is also possible, however, that the control and interface unit is an entity separate from the SPAD-module. The control and interface unit can preferably comprise a programmable logic component such as a Field Programmable Gate Array (FPGA), a microcontroller, or a PC.

Further properties and advantages of the invention will be described in the following in relation to the attached drawings. In the drawings,
- Fig. 1: shows a schematic depiction of a first embodiment of a SPAD-module according to the invention;
- Fig. 2: shows a schematic depiction of a second embodiment of a SPAD-module according to the invention;
- Fig. 3: shows a schematic depiction of a macropixel and a combination unit;
- Fig. 4: shows a schematic depiction of a plurality of macropixels and a final combination unit;
- Fig. 5: shows a schematic depiction of a third embodiment of a SPAD-module according to the invention;
- Fig. 6: shows a schematic depiction of a fourth embodiment of a SPAD-module according to the invention;
- Fig. 7: shows a schematic depiction of a shift register being part of a time control unit of the SPAD-module of Fig. 1;
- Fig. 8: shows a schematic depiction of a combination unit and a final combination unit being part of the time control unit of the SPAD-module of Fig. 1; and
- Fig. 9: shows a schematic depiction of an embodiment of an image sensor according to the invention.

As a rule, identical and equivalent components are denoted in the figures by the same reference numbers.

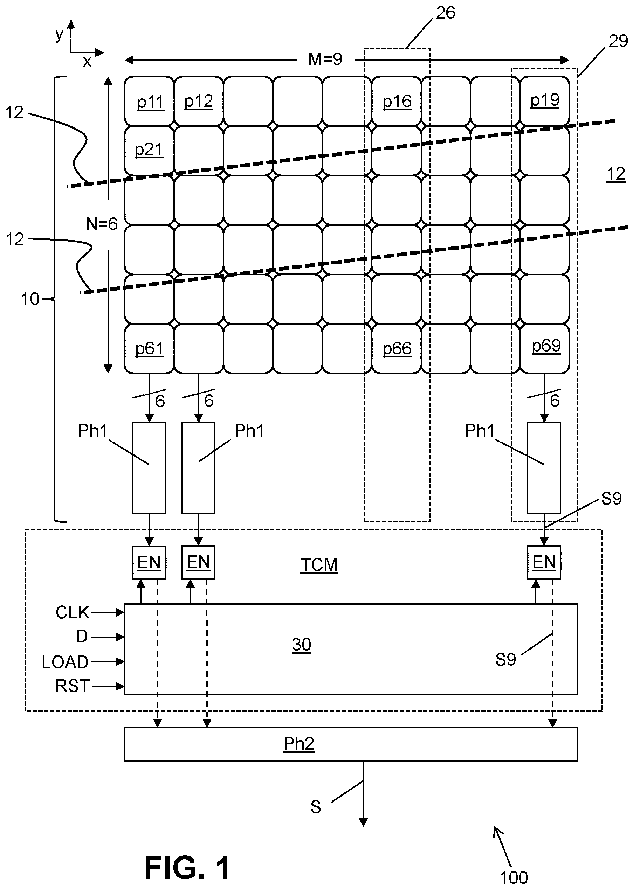

A first embodiment of a SPAD-module 100 according to the invention will be described with respect to Figs. 1, 3, 4, 7, and 8. The SPAD-module 100 shown in Fig. 1 has a SPAD-array 10 comprising a plurality of macropixels 26, 29. In the shown embodiment, SPAD-array 10 has a rectangular structure with N = 6 lines and M = 9 columns. I.e., the SPAD-array 10 comprises altogether 52 SPAD-pixels p11,..,p69. Furthermore, in the shown embodiment, the macropixels 26, 29 comprise, in each case, the SPAD-pixels of a column of the rectangular structure. E.g., the macropixel 29 comprises the SPAD-pixels of the ninth column, namely the SPAD-pixels p19,..,p69. A rectangular coordinate system x, y is indicated in Fig. 1. The lines of the SPAD-array 10 extend along the x-axis and the columns of the SPAD-array 10 extend along the y-axis.

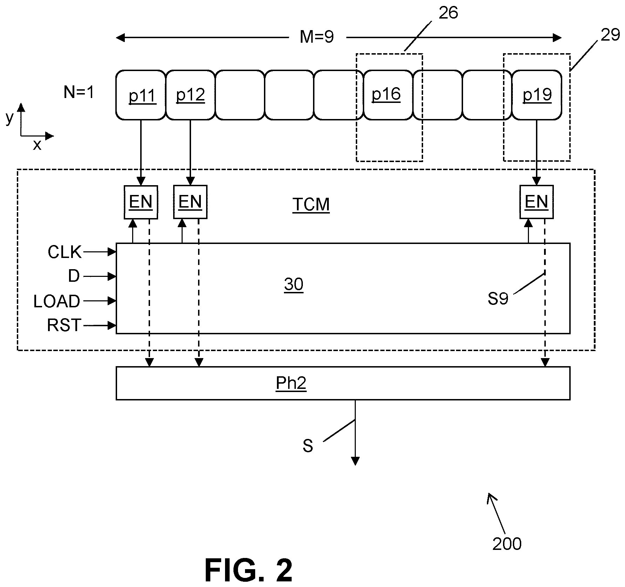

In the shown embodiment, each of the macropixels comprises a combination unit Ph1 being connected to each of the SPAD-pixels of the respective macropixel. E.g., the combination unit Ph1 of macropixel 29 is connected to each of the SPAD-pixels p19,..,p69. The combination units Ph1 are, in each case, configured for generating a macropixel signal, e.g., the macropixel signal S9 in the case of the macropixel 29, as a combination of pixel signals from at least one of the SPAD-pixels constituting the respective macropixel, wherein the macropixel signal, in each case, retains a time structure of the respectively combined pixel signals. I.e., the macropixel signal S9 retains a time structure of the combined pixel signals of SPAD-pixels p19,..,p69. This will be described below further with respect to Fig. 2.

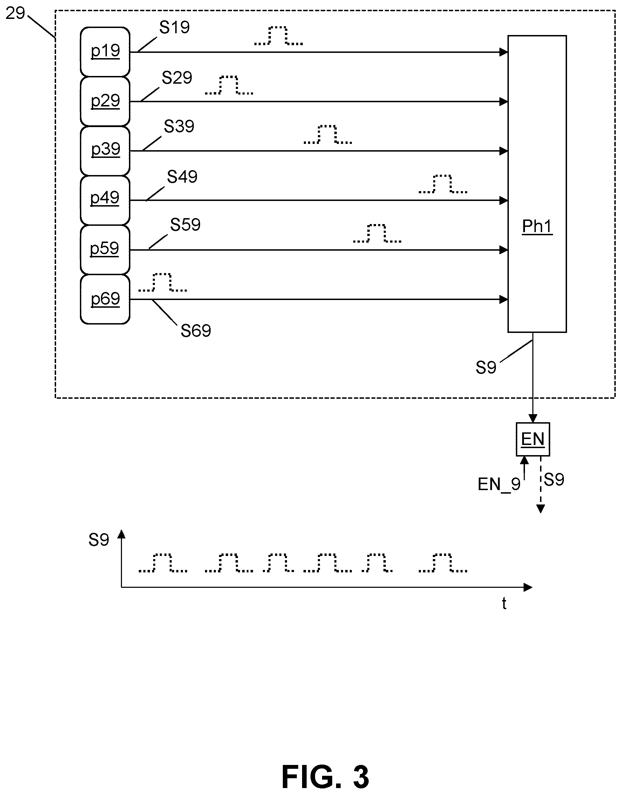

According to the invention, the SPAD-module 100 further comprises a time control unit TCM and a final combination unit Ph2. The time control unit is operatively connected with each of the macropixels and the final combination unit Ph2 is connected with the time control unit TCM. Further, according to the invention, the time control unit TCM is configured for variably selecting at least one macropixel, e.g., macropixel 29, for which a respective macropixel signal, e.g., macropixel signal S9, is forwarded to the final combination unit Ph2. Further, according to the invention, the final combination unit Ph2 is configured for generating an output signal S as a combination of the macropixel signals, e.g., macropixel signal S9, from the selected macropixels, e.g., macropixel 29, wherein the output signal S retains a time structure of the combined macropixel signals, e.g., the time structure of macropixel signal S9. This will be described below further with respect to Fig. 3.

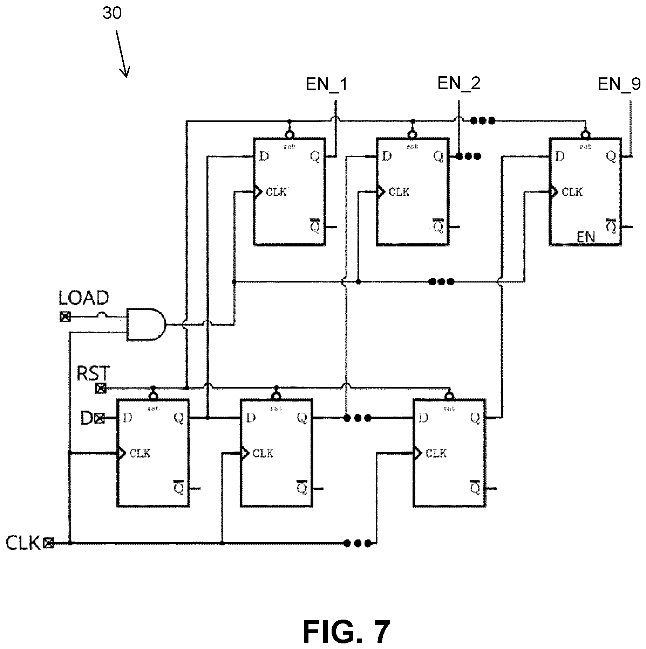

Examples for combination units Ph1 and a final combination unit Ph2 will be described below with respect to Fig. 7.

In the example shown in Fig. 1, the time control unit TCM comprises a shift register 30 with inputs CLK (clock), D (Data), LOAD, and RST (Reset). More details of the shift register 30 are shown in Fig. 7. As depicted, in Fig. 7, the shift register 30, as generally known in the prior art, is made up of cascaded flip-flop-circuits. The shift register 30 has outputs EN_1, EN_2,.., EN_9, which are connected respectively to EN-circuits of the respective macropixel. E.g., output EN_9 is connected to the EN-circuit connecting the combination unit Ph1 of macropixel 29 to the final combination unit Ph2. Depending on whether the EN_9 is high or low, the macropixel signal S9 is forwarded to the final combination unit Ph2 or not.

More specifically, the circuit of Fig. 7 operates as follows. Initially, a reset signal (RST) can be applied to reset the registers and the values EN_1,.., EN_9. Then, bits get shifted in, one at a time (D), into the first register (at the bottom) with every clock pulse (CLK). Once the desired pattern of enable signals, i.e., the pattern for the columns to be activated/deactivated, has been shifted into the first register, the LOAD signal can be asserted to a logical high position for a single clock cycle. Then the signals EN_1,.., EN_9 will be loaded with the desired pattern on the following cycle.

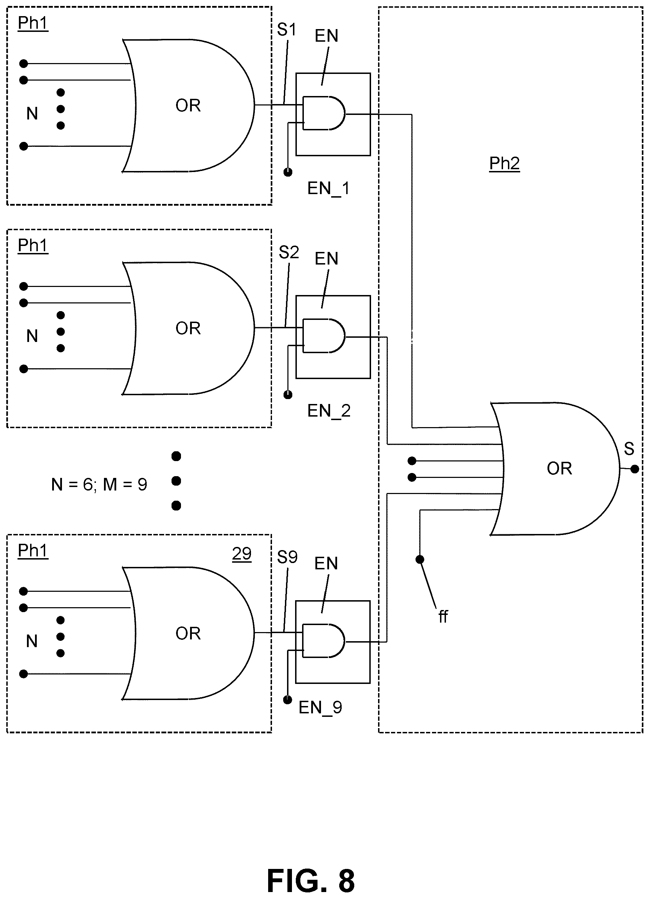

The structure and the function of the combination units Ph1 will now be described with reference to Figs. 3 and 8. Fig. 8 shows combination units Ph1 for each of the macropixels. The combination units Ph1 are, in each case, structurally identical. As depicted in Fig. 8, the combination units Ph1 comprise in each case a logical OR-gate having N = 6 inputs. I.e., the number of inputs is equal to the number of pixel signals to be combined. In the case of macropixel 29, pixel signals S19,..,S69 of the pixels p19,..,p69 are being fed to the six input lines of the corresponding combination unit Ph1. The respective macropixel signal, e.g., the macropixel signal S9 for macropixel 29, is produced at the output of the respective logical OR-gate. The output of the respective logical OR-gate is in each case fed to an enable circuit EN. The enable circuits EN consist in each case of a logical AND-gate. I.e., the macropixel signal of the ith macropixel is forwarded to the final combination unit Ph2 if the respective input signal EN_i provided by the time control module TCM for the ith macropixel is high. E.g., macropixel signal S9 will be forwarded to the final combination unit Ph2 if signal EN_9 is high.

This function will be described further with respect to Figs. 3. Figs. 3 schematically shows the macropixel 29 with its 6 SPAD-pixels p19,..,p69. Dependent on light pulses or photons impinging on the SPAD-pixels p19,..,p69 the SPAD-pixels p19,..,p69 produce pixel signals S19,..,S69. As depicted, each of the SPAD-pixels P19,..,p69 at an in each case different point in time receives a light pulse or a photon and, correspondingly, produces a schematically shown electrical pulse in its pixel signal. The combination unit Ph1 then combines the pixel signals S19,..,S69 and outputs the macropixel signal S9. Due to the structure of the combination unit Ph1 the time structure of the macropixel signal S9 as shown in the graph at the bottom of Fig. 3 reflects, i.e., is essentially identical to, the time structure of the pixel signals S19,..,S69.

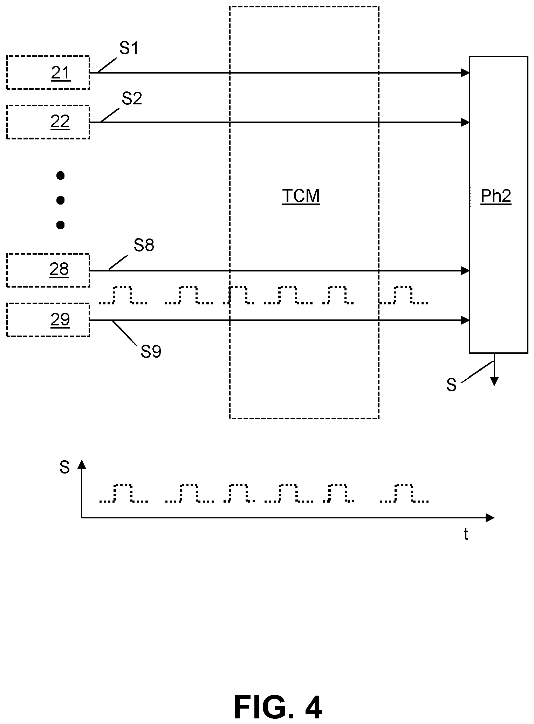

The structure and the function of the final combination unit Ph2 will now be described with reference to Figs. 4 and 8. Fig. 8 shows a final combination unit Ph2. As depicted in Fig. 8, the final combination unit Ph2 again comprises a logical OR-gate having M+1 = 10 inputs. I.e., the logical OR-gate of the combination unit Ph2 comprises an input for each of the macropixel signals S1,..,S9 to be combined. The output of the OR-gate of the final combination unit Ph2, i.e., the output signal S of the SPAD-module, is produced at the output of the OR-gate of the final combination unit Ph2. This function will be described further with respect to Fig. 4. Fig. 4 schematically shows the macropixels 21, 22,..,29, the time control unit TCM, and the final combination unit Ph2. Dependent on light pulses or photons impinging on the SPAD-pixels of the macropixels 21,..,29 the macropixels 21,..,29 produce macropixel signals S1,..,S9. In the example shown in Fig. 4 the time control unit TCM enables only the EN-circuit of macropixel 29, i.e., only the macropixel signal S9 is forwarded to the final combination unit Ph2. Due to its structure, the final combination unit Ph2 essentially reproduces the macropixel signal S9 at its output as shown in the graph at the bottom of Fig. 4. I.e., the time structure of the output signal S as shown in the graph at the bottom of Fig. 4 reflects, i.e., is essentially identical to, the time structure of the macropixel signals S9,..,S9.

In the example shown in Fig. 8, the logical OR-gate of the final combination unit Ph2 has an additional input being reserved for an emulated macropixel signal ff. An emulated macropixel signal ff can be fed to the OR-gate to provide a continual testing of the functionality of the final combination unit Ph2. Such additional inputs for testing purposes can also be provided in the combination units Ph1 of the macropixels and emulated pixel signals can be fed to the respective OR-gates to provide a continual testing of the functionality of the respective combination unit.

The combination circuits Ph1 can have monostable pulse shrinkers. An external voltage can be used as a tunable voltage which controls how much the pulses are shrunk. Shrinking pulses can be advantageous as it reduces the likelihood of pulses colliding in the output pulse S. A buffer can be added at the end which contains a control voltage that can be used to adjust a rise-time of the output signal S. This can be advantageous for calibration, in order to ensure that the output signal S has electrical characteristics that make it easy to detect outside of the SPAD-array.

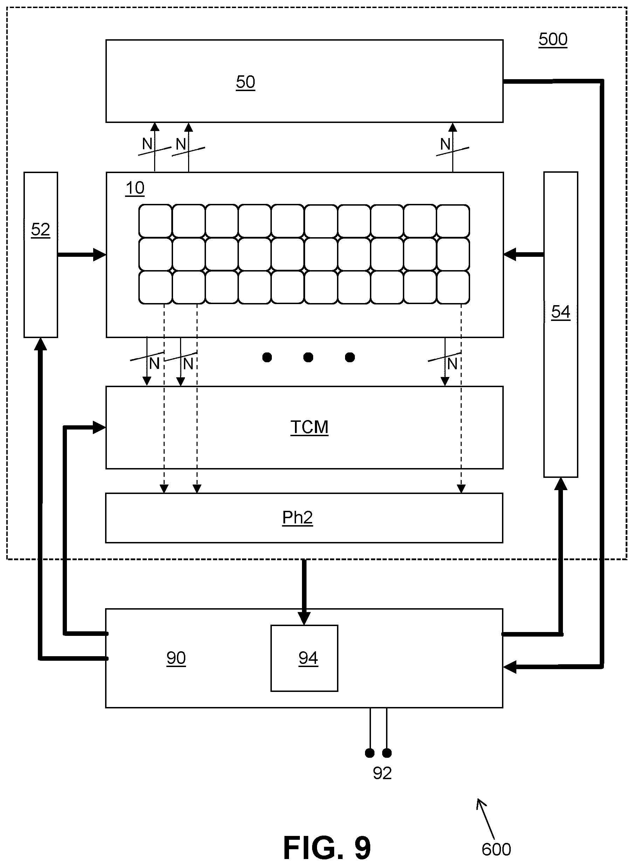

The embodiment of an image sensor 600 according to the invention will be described with respect to Fig. 9. The image sensor 600 comprises according to the invention a SPAD-module 500 according to the invention and a control and interface unit 90 being connected to the SPAD-Module 500 and comprising a time stamp unit 94 configured for attributing, in each case, a time stamp to pulses of the at least one output signal S, SC1, SC2 from the SPAD-Module 500. The SPAD-Module 500 can, e.g., be any of the SPAD-modules described herein. In the shown example, the control and interface unit 90 is realized by an FPGA on a separate chip. It would also be possible, though, to realize the control and interface unit 90 on the same chip as the SPAD-module 500.

Furthermore, the SPAD-module 500 comprises a counting unit 50 being operatively connected to each of the SPAD-pixels of the SPAD-array 10 for continuously and separately counting light pulses, in particular single photons, detected by each of the SPAD-pixels. The counting unit 50 comprises two counters, e.g., on-chip counters, for each SPAD-pixel. The counting unit 50 is independent from the time control unit TCM, i.e., regardless of the settings for the time control unit, the SPAD-module 500 can continue to perform a continuous photon counting with full spatial resolution. This is performed by the two on-chip counters for each SPAD-pixel. In this mode of operation, one counter keeps track of photon detections during a programmable integration period, while the other is sending the count data from the previous integration period to the control and interface unit 90. Essentially, for each SPAD-pixel one counter is active while the other has its corresponding data being read out from the control and interface unit 90. This mode of operation is independent from the setting of the time control unit TCM, so even if the timing or macropixel signal lines for certain SPAD-pixels are deactivated, the full spatial resolution is accessible through the on-chip counters.

Still further, the SPAD-module 500 comprises a time gate unit 54 being operatively connected to the SPAD-array 10 and the time control unit TCM for switching on or off, in particular simultaneously, the SPAD-array 10 and the time control unit TCM. The time gate unit 54 allows the SPAD-module 500 to be operated in a time gating mode which opens a window (gate) of time where the SPAD-pixels are sensitive to photons. In this mode of operation, the time control unit TCM can be operated as previously explained, with the ability to activate/deactivate the timing or macropixel signal lines as required by the application. The on-chip counters of the counting unit 50 can also be active in this mode, enabling full spatial resolution of the image sensor 600.

Finally, the SPAD-module 500 comprises a masking unit 52 being operatively connected to each of the SPAD-pixels for switching off selected SPAD-pixels according to a given selection. The masking unit 52 is also independent from the time control unit TCM. The masking unit 52 serves the purpose of masking, i.e., switching off selected pixels so that they cannot detect any photons. This is typically done to remove so-called noisy pixels from a SPAD-array such that they do not obscure or degrade the sensor performance. However, in combination with the TCM, any combination of pixels is made possible for time-stamping. This will be described further below.

The control and interface unit 90 is configured for controlling the time control unit TCM, the counting unit 50, and the time gate unit 54, for evaluating measurement data from SPAD-array 10 and the counting unit 50 and for receiving and transmitting data through a bus interface 92, for receiving energy through the interface 92, and for providing an emulated macropixel signal ff to the final combination unit Ph2.

We will now describe an example application with reference to Fig. 1. For this, we imagine the SPAD-array 10 to comprise, instead of the 9 columns of SPAD-pixels shown in Fig. 1, M = 512 columns in the x-y plane. An optical system (not shown in Fig. 1), e.g., a fluorescence microscope, can be used to shine an elongated beam 12 of visible detection light comprising a spectrum of colours onto the SPAD-array 10. In the example, the detection light shall be spectrally dispersed in the direction of extension of the beam 12 in the plane of the SPAD-array.

In a practical realization of such a system, the beam 12, as shown schematically in Fig. 1, would be tilted with respect to the horizontal axis (x-axis), owing to inherent limitations of a mechanical alignment at micrometer scales. Therefore, in this example operation, the detection signals of SPAD-pixels along the vertical axis (y-axis), i.e., signals of SPAD-pixels along a column, are combined to form a single macropixel, e.g., macropixel 29. This process of combining detections of the SPAD-pixels of one macropixel into a single physical electrical macropixel signal, e.g., macropixel signal S9, is equivalent to and is realized, as described, by the process of a logical OR. This construction allows the entire beam 12 to be detected even if the tilt extends past given horizontal lines of SPAD-pixels, as shown in Fig. 1. Moreover, in this example, the spatial resolution of SPAD-pixels along the horizontal axis determines the ability to distinguish the intensities of the different colours. Therefore, if timing information is required, e.g., for the purposes of FLIM-microscopy (FLIM = fluorescence lifetime microscopy), only for a certain colour, e.g., blue and red, then the ability to enable the electrical outputs of only certain macropixels corresponding to the physical location of those colours of light on the SPAD-array, is required. The time control unit TCM thus enables the ability to separate and/or combine between detections in the spatial domain, i.e., the physical location of a SPAD-pixel which has detected a photon. This then allows for time-stamping to occur outside of the SPAD-array, either laterally of the SPAD-array on the same microchip or outside of the microchip, i.e., using technologies such as field programmable gate arrays (FPGAs). This substantially reduces the complexity of the chip design without loss of functionality from the application point of view.

In the first embodiment of Fig. 1, the timing modules, as described, go through two rounds of logical OR combinations and therefore, in principle, contain detections from all SPAD-pixels across the SPAD-array. The first combination or Phase 1, as described earlier, creates macropixels along the vertical axis by means of the combination units Ph1. The second combination or Phase 2 by means of the final combination unit Ph2 combines all macropixels together. In order to achieve spatial filtering across the horizontal axis, only the macropixels which correspond to the desired locations must be selected by the time control unit TCM for combination. Therefore, the time control unit TCM allows for enabling/disabling of combinations performed in Phase 2.

The shift register 30 can be used to propagate disable bits for each column (macropixel). The shift register operates as follows. An input D (1 bit), is propagated on the rising edge of a periodic clock signal. Therefore, it can take up to 512 cycles of this period clock signal to initialize all of the disable bits, depending on the required configuration. A configuration load signal LOAD is used to enable (load) all of the disable signals, once the required configuration has been propagated. A reset signal RST is also included to reset all of the disable signals (enable all macropixel outputs). Any combination of disable/enable is possible and the load function can occur at any moment, thereby facilitating a flexible way for separating out detections occurring across the spatial domain. The output of this second combination is known as the timing-line signal or output signal S, and can then be sent to the control and interface unit 90 of the image sensor 600 for external time stamping.

Fig. 2 shows a second embodiment of the SPAD-module according to the invention where each of the macropixels comprises only one SPAD-pixel p11,.., p19. In this case, the macropixel signals of the macropixels is in each case identical to the pixel signal S11,.., S19 of the respective SPAD-pixel p11,.., p19. Thus, the combination units Ph1 are not necessary for this embodiment.

In order to increase flexibility with respect to acquiring temporal information (timestamps) at different physical locations of the SPAD-array, the SPAD array can be sectioned into clusters, with each cluster containing its own timing-line signal, i.e., its own output signal. Therefore, dependent on the respective specified behavior of the time control unit TCM, sections of the total SPAD-array 10 can remain active or inactive with the combined macropixel outputs remaining in each case isolated from other output signals. An advantage thereof is that the time control unit TCM is agnostic to how the array is clustered, as the design operation remains the same regardless of how many clusters an array is sectioned off into.

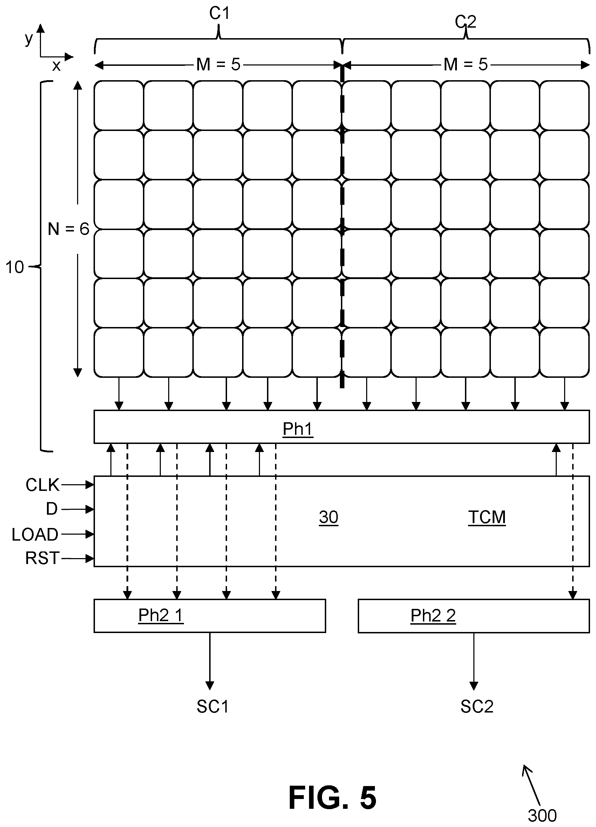

An example will be described with reference to the third embodiment of a SPAD-module 300 according to the invention shown in Fig. 5. Here, only the differences with respect to the SPAD-module 100 of Fig. 1 are described. The first difference is that the SPAD-array comprises 10 instead of only 9 columns. The SPAD-module 300 differs from the SPAD-module 100 further in that it comprises a first final combination unit Ph2_1 and a second final combination unit Ph2_2. The first final combination unit Ph2_1 combines the macropixel signals of the first cluster C1 of micropixels to an output signal SC1. The second final combination unit Ph2_2 combines the macropixel signals of a second cluster C2 of micropixels to an output signal SC2. The output signals SC1 and SC2 are forwarded to the control and interface unit 90 of the image sensor 500, e.g., for time stamping purposes. The structure of the time control unit TCM is the same as in Fig. 1.

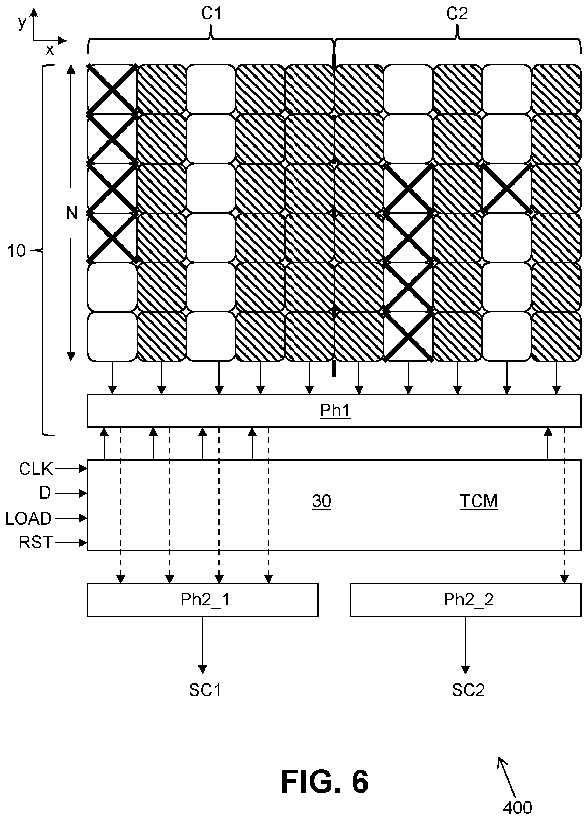

Spatial resolution can be increased or decreased along the vertical axis (y-axis) as well, by masking individual SPAD-pixels. Masking is a well-known technique where a SPAD-pixel is simply turned off such that it cannot detect any photons. This can be brought about by the masking unit 52 shown in Fig. 9. Masking is typically done to remove so-called noisy SPAD-pixels from a SPAD-array such that these noisy SPAD-pixels do not obscure or degrade the overall image sensor performance. However, in combination with the time control unit TCM, by using the masking unit 52, any combination of SPAD-pixels is possible for time-stamping, starting from a single SPAD-pixel to irregular combinations varied across clusters. An example configuration showing masking and the time control unit TCM working in conjunction to enable or disable the outputs of certain SPAD-pixels is shown in Fig. 6. The embodiment of a SPAD-module 400 of Fig. 6 differs from the SPAD-module 300 of Fig. 5 insofar that a couple of SPAD-pixels, namely the SPAD-pixels having a cross, are masked, i.e., switched off by the masking unit (not shown in Fig. 6), while some entire columns of SPAD-pixel namely the columns being depicted with a diagonal hatching, are disabled by means of the time control module TCM.

As previously described, the disable signals in the shift register 30 are propagated in one cycle at a time, always moving in a single direction. In order to add additional flexibility, a direction control signal can be added to the time control unit TCM. This allows the propagation of bits to happen in either direction, which then allows for potentially faster control and/or switching of configurations. For example, a scenario can be imagined where it is desired to have two macropixels, which are physically close to each other, be alternated as enabled and disabled within a short period of time. This can be performed with the time control unit TCM by having one disable bit loaded, toggling the direction control and reloading as required.

The time control unit TCM as described herein is a flexible tool for aggregating the detection in a SPAD-array in a reconfigurable manner. Having the power to dynamically control which detectors are contributed to an aggregated timing-line, enables the use of off chip chronometer circuits, which reduces system complexity.

Here, a new SPAD-module is described having a time control unit TCM which substantially enhances the feature set of an integrated image sensor microchip. More specifically, the purpose of the time control unit TCM is to facilitate the collection of photon detections from a variety of physical locations (spatial domain) within an image sensor, comprising an array of single-photon avalanche diode (SPAD) pixels, in a reconfigurable manner. This then enables flexibility in terms of extracting timing information (temporal domain) from any given detection, as explained in detail above.

### List of reference numbers

- 10: SPAD-array
- 12: detection light, light to be detected, e.g., spectrally and spatially separated
- 21,..,29: macropixels
- 30: shift register
- 50: counting unit
- 52: masking unit
- 54: time gate unit
- 90: control and interface unit
- 92: energy and data interface
- 94: time stamp unit
- 100: SPAD-module according to the invention
- 200: SPAD-module according to the invention
- 300: SPAD-module according to the invention
- 400: SPAD-module according to the invention
- 500: SPAD-module according to the invention
- 600: image sensor according to the invention
- C1: first cluster of macropixels
- C2: second cluster of macropixels
- EN: enable circuit
- EN_1: enable signal for 1st macropixel
- EN_2: enable signal for 2nd macropixel
- EN_9: enable signal for 9th macropixel
- ff: force fire signal
- M: number of columns of SPAD-array 10 or of clusters C1 and C2
- N: number of lines of SPAD-array 10
- Ph1: combination unit
- Ph2: final combination unit
- Ph2_1: first final combination unit
- Ph2_2: second final combination unit
- p11,.., p69: SPAD-pixels of SPAD-array 10
- S: output signal
- SC1: output signal of first cluster
- SC2: output signal of second cluster
- S19,..,S69: pixel signals of SPAD-pixels p19,..,p69, respectively
- S1,..,S9: macropixel signals of macropixel 21,..,29, respectively
- t: time coordinate
- TCM: time control unit
- x, y: lateral coordinates in a sensor plane of the SPAD-array

## Claims

1. SPAD-module
having a SPAD-array (10) comprising a plurality of macropixels (26, 29), each macropixel (26, 29) comprising at least one SPAD-pixel (p19,..,p69), **characterized in**
further comprising a time control unit (TCM) being operatively connected with each of the macropixels (26, 29) and at least one final combination unit (Ph2) being connected with the time control unit (TCM),
wherein the time control unit (TCM) is configured for variably selecting at least one macropixel (26, 29) for which a respective macropixel signal (S9) is forwarded to the final combination unit (Ph2) and
wherein the final combination unit (Ph2) is configured for generating an output signal (S) as a combination of the macropixel signals (S1, S2,.., S9) from the selected macropixels (26, 29) and wherein the output signal (S) retains a time structure of the combined macropixel signals (S1, S2,.., S9).

2. SPAD-module according to claim 1,
**characterized in**
**that** the SPAD-array (10) has a rectangular structure or that the SPAD-array has a hexagonal structure.

3. SPAD-module according to claim 2,
**characterized in**
**that** the macropixels (26, 29) comprise, in each case, the SPAD-pixels (p19,..,p69) of a column of the rectangular structure or
**that** the macropixels comprise, in the hexagonal structure, in each case, a central SPAD-pixel and six SPAD-pixels immediately adjacent to the central SPAD-pixel or
**that** the macropixels comprise, in the hexagonal structure, in each case, SPAD-pixels forming concentrical rings around a central SPAD-pixel.

4. SPAD-module according to one of the claims 1 to 3,
**characterized in that**
at least one or each of the macropixels (26, 29) comprises only one SPAD-pixel (p11,..,p19) and
that the macropixel signal of macropixels comprising only one SPAD-pixel is identical to the pixel signal (S11,..,S19) of the respective SPAD-pixel (p11,..,p19).

5. SPAD-module according to one of the claims 1 to 4,
**characterized in**
**that** at least one or each of the macropixels (26, 29) comprises a plurality of SPAD-pixels (p19,..,p69) and further comprises a combination unit (Ph1) being connected to each of the SPAD-pixels (p19,..,p69) of the respective macropixel (29) and
**that** the combination unit (Ph1) is, in each case, configured for generating the macropixel signal (S9) as a combination of pixel signals (S19, S29,.., S69) from at least one of the SPAD-pixels (p19,..,p69) constituting the respective macropixel (29), wherein the macropixel signal (S9), in each case, retains a time structure of the respectively combined pixel signals (S19, S29,.., S69),

6. SPAD-module according to one of the claims 1 to 5,
**characterized in**
**that** at least one or each combination unit (Ph1) comprises a logical OR-gate having at least n inputs, where n is the number of pixel signals (S19,..,S69) to be combined and/or
**that** at least one or each final combination unit (Ph2) comprises a logical OR-gate having at least M inputs, where M is the number of macropixel signals to be combined (S1,..,S9).

7. SPAD-module according to claim 6,
**characterized in that**
in at least one or each combination unit (Ph1) the OR-gate comprises an additional input being reserved for an emulated pixel signal and/or
in at least one or each final combination unit (Ph2) the OR-gate comprises an additional input being reserved for an emulated macropixel signal (ff).

8. SPAD-module according to one of the claims 1 to 7,
**characterized in that**
the time control unit (TCM) is reconfigurable for generating at least two different clusters (C1, C2) of macropixels and
that a separate final combination unit (Ph2) is present for each of the clusters.

9. SPAD-module according to one of the claims 1 to 8,
**characterized in that**
the time control unit (TCM) comprises a shift register (30) configured for enabling selected macropixels (21,..,29) according to a given selection.

10. SPAD-module according to one of the claims 1 to 9,
further comprising a masking unit being operatively connected to each of the SPAD-pixels (p11,..,p69) for switching off selected SPAD-pixels according to a given selection.

11. SPAD-module according to one of the claims 1 to 10,
further comprising a counting unit (50) being operatively connected to each of the SPAD-pixels (p11,..,p69) for continuously and separately counting light pulses, in particular single photons, detected by each of the SPAD-pixels (p11,..,p69).

12. SPAD-module according to claim 11,
**characterized in that**
the counting unit (50) comprises two counters for each SPAD-pixel (p11,..,p69).

13. SPAD-module according to one of the claims 10 to 12,
**characterized in that**
the masking unit (52) is independent from the time control unit (TCM) and/or that the counting unit (52) is independent from the time control unit (TCM).

14. SPAD-module according to one of the claims 1 to 13,
further comprising a time gate unit (54) being operatively connected to the SPAD-array (10) and the time control unit (TCM) for switching on or off, in particular simultaneously, the SPAD-array (10) and the time control unit (TCM).

15. Image sensor
comprising a SPAD-module (600) according to one of the claims 1 to 14 and a control and interface unit (90) being connected to the SPAD-Module (600) and comprising a time stamp unit (94) configured for attributing, in each case, a time stamp to pulses of the at least one output signal (S; SC1, SC2) from the SPAD-Module (600).

16. Image sensor according to claim 15,
**characterized in that**
the control and interface unit (90) is configured for at least one of:
providing a clock signal to the time control unit (TCM);
controlling the time control unit (TCM);
controlling the time control unit (TCM) in a multiplex-mode in such a way that the macropixel signals (S1,..,S9) are forwarded to the or one of the final combination units (Ph2; Ph2_1, Ph2_2) one at a time;
controlling the time gate unit (54);
controlling the counting unit (50);
evaluating measurement data from the counting unit (50);
evaluating measurement data, in particular output signals (S; SC1, SC2), from the SPAD-module (600);
receiving and transmitting data through an interface (92), in particular a bus interface;
receiving energy through the interface (92);
providing an emulated pixel signal to at least one or each of the combination units (Ph1) of the SPAD-module (600) and/or providing an emulated macropixel signal (ff) to least one or each of the final combination units (Ph2) of the SPAD-module (600).
